# EUROPÄISCHE PATENTSCHRIFT

(11) **EP 4 268 557 B1**
(45) Veröffentlichungstag und Bekanntmachung des Hinweises auf die Patenterteilung: **10.12.2025**
(21) Anmeldenummer: 23155774.5
(22) Anmeldetag: 09.02.2023
(51) Int. Cl.: A01B 69/04

(54) **VERFAHREN ZUM ERZEUGEN VON DATEN ZUM STEUERN EINER AUTONOMEN LANDWIRTSCHAFTLICHEN ARBEITSMASCHINE**
METHOD FOR GENERATING DATA FOR CONTROLLING AN AUTONOMOUS AGRICULTURAL MACHINE
PROCÉDÉ DE GÉNÉRATION DE DONNÉES POUR COMMANDER UNE MACHINE DE TRAVAIL AGRICOLE AUTONOME

(30) Priorität: 27.04.2022 DE 102022110116
(43) Veröffentlichungstag der Anmeldung: 01.11.2023
(73) Patentinhaber: CLAAS Selbstfahrende Erntemaschinen GmbH, 33428 Harsewinkel (DE)
(72) Erfinder: Mähler, Reinhold, 33378 Rheda-Wiedenbrück (DE); Ehlert, Christian, 33719 Bielefeld (DE); Bormann, Bastian, 33334 Gütersloh (DE); Baumgarten, Joachim, 48361 Beelen (DE); Neitemeier, Dennis, 59510 Lippetal (DE); Witte, Johann, 58730 Fröndenberg (DE); Redenius, Jannik, 32361 Pr. Oldendorf (DE); Bohl, Arne, 33330 Gütersloh (DE); Nacke, Eberhard, 33332 Gütersloh (DE); Apke, Christoph, 33659 Bielefeld (DE); Korthals, Timo, 33818 Leopoldshöhe (DE); Thiesmann, Waldemar, 49080 Osnabrück (DE); Schröder, Axel, 33332 Gütersloh (DE); Monkenbusch, Robin, 33378 Rheda-Wiedenbrück (DE)
(74) Vertreter: CLAAS Gruppe

(56) Entgegenhaltungen:
- DE-A1- 102016 121 523
- US-A1- 2019 289 770

## Beschreibung

Die vorliegende Anmeldung betrifft ein Verfahren zum Erzeugen von Daten zum Steuern einer autonomen landwirtschaftlichen Arbeitsmaschine sowie ein entsprechendes Computerprogrammprodukt und dessen Verwendung.

In der modernen Landwirtschaft sind vermehrt Bestrebungen dahingehend zu erkennen Arbeitseinsätze autonom durchzuführen, um die Produktivität und Wirtschaftlichkeit der Prozesse zu erhöhen. Hierfür kommen sogenannte autonome landwirtschaftliche Arbeitsmaschinen zum Einsatz, die sich dadurch auszeichnen, dass kein Bediener in einer Kabine zur Steuerung derselben vorhanden ist bzw. sein muss. Demnach steht bei autonomen landwirtschaftlichen Arbeitsmaschinen kein Bediener zur Verfügung, der einen durchzuführenden landwirtschaftlichen Arbeitsablauf mit einer Abfolge von verschiedenen Arbeitsschritten kennt und einzelne Steuerfunktionen während des Betriebs der Arbeitsmaschine auf einer landwirtschaftlichen Fläche ausführen bzw. beauftragen kann. Derartige autonome landwirtschaftliche Arbeitsmaschinen werden daher auch als unbemannte landwirtschaftliche Arbeitsmaschinen bezeichnet.

Aus dem Stand der Technik sind bereits Systeme zur Führung von Fahrzeugen bekannt, die ein selbsttätiges Abfahren einer Route auf der landwirtschaftlichen Fläche durch bemannte Arbeitsmaschinen erlauben.

So beschreibt die EP 1 527 667 A1 beispielsweise ein System zur Führung eines Fahrzeugs, das ein Datenspeichergerät zur Abspeicherung von Höhendaten und zugehörigen Ortsdaten für eine zu bearbeitende Fläche, ein positionsbestimmenden Empfänger zur Bestimmung einer jeweiligen Position des Fahrzeugs innerhalb der zu bearbeitenden Fläche, einen Datenprozessor, der einen Rollwinkelabschätzer zur Abschätzung von Rolldaten, die der jeweiligen Position entsprechen, und eine Stampfwinkelabschätzer zur Abschätzung von Stampfdaten, die der jeweiligen Position entsprechen, umfasst, sowie eine Lenksteuerung, die betreibbar ist, das Fahrzeug unter Verwendung der abgeschätzten Rolldaten und Stampfdaten zu führen, so dass das Fahrzeug einem gewünschten Weg folgt, aufweist.

Zwar können bemannte Fahrzeuge durch solche Systeme entlang einer Wegstrecke bewegt werden, allerdings sind für die Ausführung zumindest einiger Steuerfunktionen zur Durchführung von Arbeitsschritten während die Route abgefahren wird Eingaben seitens eines Bedieners notwendig, der sich in der Kabine der Arbeitsmaschine befindet, so dass beispielsweise an die Arbeitsmaschine adaptierte Arbeitsaggregate angehoben oder abgesenkt werden, wie bei einer Fahrt am Vorgewende.

Autonome landwirtschaftliche Arbeitsmaschinen verfügen allerdings nicht über einen solchen Bediener, der Kenntnisse über den auszuführenden landwirtschaftlichen Arbeitsablauf mit allen Arbeitsschritten hat. Vielmehr sind die autonomen landwirtschaftlichen Arbeitsmaschinen an und für sich erst einmal nicht dazu in der Lage, einen Arbeitsschritt auszuführen solange sie keine Daten erlangt haben, die die autonome landwirtschaftliche Arbeitsmaschine dazu befähigen, den Arbeitsschritt oder mehrere Arbeitsschritte eines landwirtschaftlichen Arbeitsablaufs durchzuführen.

Weitere Verfahren zum Erzeugen von Daten zur Steuerung einer autonomen landwirtschaftlichen Arbeitsmaschine sind aus den Druckschriften DE 10 2016 121523 A1 und US 2019/289770 A1 bekannt.

Die Druckschrift DE 10 2016 121523 A1 beschreibt ein Verfahren zum Erzeugen von Daten zur Steuerung einer autonomen landwirtschaftlichen Arbeitsmaschine, welches die folgenden Verfahrensschritte umfasst: Generieren von digitalen Daten einer zu bearbeitenden landwirtschaftlichen Fläche durch eine Verarbeitungseinrichtung und Speichern der digitalen Daten der zu bearbeitenden landwirtschaftlichen Fläche in einer mit der Verarbeitungseinrichtung zur Übertragung von Daten verbundenen Datenbank; Generieren von digitalen Daten der autonomen landwirtschaftlichen Arbeitsmaschine durch die Verarbeitungseinrichtung und Speichern der digitalen Daten der autonomen landwirtschaftlichen Arbeitsmaschine in der Datenbank; Simulieren mindestens eines den digitalen Daten der zu bearbeitenden landwirtschaftlichen Fläche und Arbeitsschrittes eines eine Abfolge an Arbeitsschritten umfassenden landwirtschaftlichen Arbeitsablaufs anhand eines mathematischen Modells des mindestens einen Arbeitsschrittes durch die Verarbeitungseinrichtung, wobei aus den digitalen Daten der autonomen landwirtschaftlichen Arbeitsmaschine Daten abgeleitet werden, die als Eingangsgrößen der Simulation dem mathematischen Modell des mindestens einen Arbeitsschrittes zugeführt werden, und wobei als Ausgangsgröße der Simulation eine Anweisung zur Durchführung des Arbeitsschrittes durch die autonome landwirtschaftliche Arbeitsmaschine erzeugt wird; Übermitteln der als Ausgangsgröße der Simulation erzeugten Anweisung an eine Steuereinrichtung der autonomen landwirtschaftlichen Arbeitsmaschine und Ausführen der Anweisung durch die Steuereinrichtung der autonomen landwirtschaftlichen Arbeitsmaschine; wobei mittels einer Sensoreinrichtung während der Durchführung des Arbeitsschrittes durch die autonome landwirtschaftliche Arbeitsmaschine Echtzeitdaten generiert werden, die Betriebsparameter und/oder Umgebungsparameter der autonomen landwirtschaftlichen Arbeitsmaschine repräsentieren.

Ausgehend von dem vorstehend genannten Stand der Technik ist es demnach die Aufgabe der vorliegenden Erfindung, ein Verfahren anzugeben, das eine autonome landwirtschaftliche Arbeitsmaschine gesamtheitlich zur Durchführung eines Arbeitsschritts eines eine Abfolge an Arbeitsschritten umfassenden landwirtschaftlichen Arbeitsablaufs auf einer landwirtschaftlichen Fläche befähigt.

Diese Aufgabe wird erfindungsgemäß durch die Merkmale des unabhängigen Patentanspruchs 1 gelöst, wobei vorteilhafte Weiterbildungen des erfindungsgemäßen Verfahrens Gegenstand der entsprechenden abhängigen Patentansprüche 2 bis 13 sind.

Demnach betrifft die vorliegende Erfindung ein Verfahren zum Erzeugen von Daten zur Steuerung einer autonomen landwirtschaftlichen Arbeitsmaschine. Das Verfahren umfasst ein Generieren eines digitalen Abbilds einer zu bearbeitenden landwirtschaftlichen Fläche durch eine Verarbeitungseinrichtung und ein Speichern des digitalen Abbilds der zu bearbeitenden landwirtschaftlichen Fläche in einer mit der Verarbeitungseinrichtung zur Übertragung von Daten verbundenen Datenbank. Weiterhin umfasst das Verfahren ein Generieren eines digitalen Abbilds der autonomen landwirtschaftlichen Arbeitsmaschine durch die Verarbeitungseinrichtung und ein Speichern des digitalen Abbilds der autonomen landwirtschaftlichen Arbeitsmaschine in der Datenbank. Das Verfahren ist gekennzeichnet durch ein Simulieren mindestens eines Arbeitsschrittes eines eine Abfolge an Arbeitsschritten umfassenden landwirtschaftlichen Arbeitsablaufs anhand eines mathematischen Modells des mindestens einen Arbeitsschrittes durch die Verarbeitungseinrichtung. Aus dem digitalen Abbild der zu bearbeitenden landwirtschaftlichen Fläche und dem digitalen Abbild der autonomen landwirtschaftlichen Arbeitsmaschine werden Daten abgeleitet, die als Eingangsgrößen der Simulation dem mathematischen Modell des mindestens einen Arbeitsschrittes zugeführt werden. Als Ausgangsgröße der Simulation wird eine Anweisung zur Durchführung des Arbeitsschrittes durch die autonome landwirtschaftliche Arbeitsmaschine erzeugt. Weiterhin ist das Verfahren durch ein Übermitteln der als Ausgangsgröße der Simulation erzeugten Anweisung an eine Steuereinrichtung der autonomen landwirtschaftlichen Arbeitsmaschine und ein Ausführen der Anweisung durch die Steuereinrichtung der autonomen landwirtschaftlichen Arbeitsmaschine gekennzeichnet.

Mittels des erfindungsgemäßen Verfahrens ist es demnach möglich, die Durchführung eines Arbeitsschrittes eines eine Abfolge an Arbeitsschritten umfassenden Arbeitsablaufs virtuell ablaufen zu lassen, bevor die eigentliche reale Durchführung auf der landwirtschaftlichen Fläche erfolgt. Zunächst werden digitale Zwillinge sowohl der zu bearbeitenden landwirtschaftlichen Fläche als auch der autonomen landwirtschaftlichen Arbeitsmaschine gebildet, anhand derer Eingangsgrößen für den Simulationsschritt abgeleitet werden. Der Vorteil der Nutzung von digitalen Zwillingen liegt darin, dass ein nahezu identisches Abbild der realen landwirtschaftlichen Flächen und autonomen landwirtschaftlichen Arbeitsmaschinen digitalisiert vorliegt, in denen sämtliche für die Durchführung eines Arbeitsschrittes notwendigen Parameter mit Bezug zur landwirtschaftlichen Fläche und zur autonomen landwirtschaftlichen Arbeitsmaschine hinterlegt sind. Mit anderen Worten, die digitalen Abbilder der landwirtschaftlichen Fläche und der autonomen landwirtschaftlichen Arbeitsmaschine stellen eine im Wesentlichen exakte Kopie der realen landwirtschaftlichen Fläche und der realen autonomen landwirtschaftlichen Arbeitsmaschine dar.

Anhand der Simulation des Arbeitsschrittes, die auf dem mathematischen Modell des mindestens einen Arbeitsschrittes basiert und Daten aus dem digitalen Abbild der zu bearbeitenden landwirtschaftlichen Fläche und dem digitalen Abbild der autonomen landwirtschaftlichen Arbeitsmaschine als Eingangsgrößen nutzt, kann ein vorzunehmender Arbeitsschritt auf der zu bearbeitenden landwirtschaftlichen Fläche mit der autonomen landwirtschaftlichen Arbeitsmaschine vorab simuliert werden, wobei als Ausgangsgröße der Simulation Anweisungen erzeugt werden, die die autonome landwirtschaftliche Arbeitsmaschine dazu befähigen, den vorab simulierten Arbeitsschritt anschließend in der Realität entsprechend durchzuführen. Mit anderen Worten, durch die Simulation, die ein Modell des Arbeitsschrittes sowie die digitalen Abbilder der zu bearbeitenden landwirtschaftlichen Fläche und der autonomen landwirtschaftlichen Arbeitsmaschine berücksichtigt, wird die an und für sich "unwissende" autonome landwirtschaftliche Arbeitsmaschine mit der Fähigkeit ausgestattet den Arbeitsschritt selbsttätig, also autonom, ohne einen Bediener, auf oder in der Nähe der autonomen landwirtschaftlichen Arbeitsmaschine, durchzuführen. Anhand der Anweisung kann die Steuereinrichtung demnach die einzelnen Arbeitsaggregate der autonomen landwirtschaftlichen Arbeitsmaschine und/oder an die autonome landwirtschaftliche Arbeitsmaschine adaptierte Arbeitsaggregate ansteuern, so dass der vorab simulierte Arbeitsschritt auf der zu bearbeitenden landwirtschaftlichen Fläche von der autonomen landwirtschaftlichen Arbeitsmaschine durchgeführt wird.

Das mathematische Modell des Arbeitsschrittes definiert Zusammenhänge der Eingangsgrößen bzw. definiert wechselwirkende Verknüpfungen der Eingangsgrößen im Hinblick auf die Durchführung eines spezifischen Arbeitsschrittes, so dass bei Zuführung der spezifischen Daten aus den digitalen Abbildern die Anweisung zur Durchführung des Arbeitsschrittes als Ausgangsgröße der Simulation erzeugt wird, wodurch der zuvor simulierte Arbeitsschritt im Wesentlichen, also bis auf situationsbedingte unvorhersehbare Ereignisse vor Ort, so in der Realität von der autonomen landwirtschaftlichen Arbeitsmaschine durchgeführt werden kann. Das mathematische Modell kann dabei auf einfachen und/oder komplexen mathematischen Gleichungssystemen, die die Zusammenhänge definieren, und Algorithmen zur Lösung dieser Gleichungssysteme basieren. Insbesondere können die zur Lösung der Gleichungssysteme verwendeten Algorithmen auf einer künstlichen Intelligenz, vorzugsweise einem künstlichen neuronalen Netz, basieren.

Gemäß einer vorteilhaften Weiterbildung der Erfindung ist vorgesehen, dass die Verarbeitungseinrichtung zum Generieren des digitalen Abbilds der zu bearbeitenden landwirtschaftlichen Fläche auf Referenzdaten zugreift, wobei die Referenzdaten agronomische Daten, insbesondere Bodendaten, Bestandsdaten, Ertragsdaten und/oder Flächendaten, Geodaten und/oder Wetterdaten sind, wobei die Referenzdaten in der Datenbank und/oder in einer von der Datenbank unabhängigen Referenzdatenbank hinterlegt sind und die Verarbeitungseinrichtung mit der Referenzdatenbank zur Übertragung von Daten verbunden ist.

Die Verwendung von Referenzdaten zur Erzeugung des digitalen Abbilds der zu bearbeitenden landwirtschaftlichen Fläche sorgt dafür, dass die reale landwirtschaftliche Fläche, die bearbeitet werden soll, exakt durch den digitalen Zwilling abgebildet ist. Da die Simulation des Arbeitsschrittes Daten aus dem digitalen Zwilling der zu bearbeitenden landwirtschaftlichen Fläche verwendet, wird durch die Nutzung der Referenzdaten zur Erzeugung des digitalen Abbilds sichergestellt, dass, bis auf situationsbedingte unvorhersehbare Ereignisse vor Ort während der Durchführung des Arbeitsschrittes, keine Abweichungen zwischen der simulierten und der realen Durchführung des Arbeitsschrittes auftreten.

Gemäß einer vorteilhaften Weiterbildung der Erfindung ist vorgesehen, dass die Verarbeitungseinrichtung zum Generieren des digitalen Abbilds der autonomen landwirtschaftlichen Arbeitsmaschine auf Daten der autonomen landwirtschaftlichen Arbeitsmaschine, insbesondere Geometriedaten, Betriebszustandsdaten und/oder Ausstattungsdaten der autonomen landwirtschaftlichen Arbeitsmaschine, zugreift.

Entsprechend der Verwendung von Referenzdaten zum Erzeugen des digitalen Abbilds der zu bearbeitenden landwirtschaftlichen Fläche sorgt der Zugriff auf Daten der autonomen landwirtschaftlichen Arbeitsmaschine durch die Verarbeitungseinrichtung zum Erzeugen des digitalen Abbilds der autonomen landwirtschaftlichen Arbeitsmaschine dafür, dass die reale autonome landwirtschaftliche Arbeitsmaschine, die zur Bearbeitung der landwirtschaftlichen Fläche genutzt werden soll, exakt durch den digitalen Zwilling abgebildet ist. Da die Simulation des Arbeitsschrittes Daten, die aus dem digitalen Zwilling der autonomen landwirtschaftlichen Arbeitsmaschine abgeleitet werden, als Eingangsgrößen berücksichtigt, wird durch die Nutzung der Daten der autonomen landwirtschaftlichen Arbeitsmaschine zum Erzeugen des digitalen Abbilds sichergestellt, dass, bis auf situationsbedingte unvorhersehbare Ereignisse vor Ort während der Durchführung des Arbeitsschrittes, keine Abweichungen zwischen der simulierten und der realen Durchführung des Arbeitsschrittes auftreten.

Gemäß einer vorteilhaften Weiterbildung der Erfindung ist vorgesehen, dass das Verfahren ein Generieren eines digitalen Abbilds eines an die autonome landwirtschaftliche Arbeitsmaschine adaptierbaren Arbeitsaggregats durch die Verarbeitungseinrichtung und ein Speichern des digitalen Abbilds des Arbeitsaggregats in der Datenbank umfasst.

Insbesondere werden aus dem digitalen Abbild des an die autonome landwirtschaftliche Arbeitsmaschine adaptierbaren Arbeitsaggregats Daten abgeleitet, die als Eingangsgrö-ßen der Simulation dem mathematischen Modell des mindestens einen Arbeitsschrittes zugeführt werden.

Das Erzeugen eines digitalen Abbilds eines an die autonome landwirtschaftliche Arbeitsmaschine adaptierbaren Arbeitsaggregats sowie das Ableiten von Daten aus diesem digitalen Abbild, die als weitere Eingangsgrößen der Simulation dem mathematischen Modell des mindestens einen Arbeitsschrittes zugeführt werden, stellen sicher, dass auch bei der Durchführung von Arbeitsschritten, für die an die autonome landwirtschaftliche Arbeitsmaschine adaptierte Arbeitsaggregate benötigt werden, bis auf situationsbedingte unvorhersehbare Ereignisse vor Ort während der Durchführung des Arbeitsschrittes, keine Abweichungen zwischen der simulierten und der realen Durchführung des Arbeitsschrittes auftreten. Die an die Steuereinrichtung der autonomen landwirtschaftlichen Arbeitsmaschine übermittelte Anweisung sorgt dann ebenfalls dafür, dass die Steuereinrichtung auch die an die autonome landwirtschaftliche Arbeitsmaschine adaptierten Arbeitsaggregate entsprechend der simulierten Durchführung des Arbeitsschrittes ansteuern kann.

Vorzugsweise ist vorgesehen, dass die Verarbeitungseinrichtung zum Generieren des digitalen Abbilds des an die autonome landwirtschaftliche Arbeitsmaschine adaptierbaren Arbeitsaggregats auf Daten des Arbeitsaggregats, insbesondere Geometriedaten, Betriebszustandsdaten und/oder Ausstattungsdaten des Arbeitsaggregats, zugreift.

Entsprechend der Verwendung von Referenzdaten zum Erzeugen des digitalen Abbilds der zu bearbeitenden landwirtschaftlichen Fläche sowie von Daten der autonomen landwirtschaftlichen Arbeitsmaschine zum Erzeugen des digitalen Abbilds der autonomen landwirtschaftlichen Arbeitsmaschine, sorgt der Zugriff auf Daten des an die autonome landwirtschaftliche Arbeitsmaschine adaptierbaren Arbeitsaggregats durch die Verarbeitungseinrichtung zum Erzeugen des digitalen Abbilds des Arbeitsaggregats dafür, dass das reale Arbeitsaggregat, das zur Bearbeitung der landwirtschaftlichen Fläche durch die autonome landwirtschaftliche Arbeitsmaschine genutzt werden soll, exakt durch den digitalen Zwilling abgebildet ist. Da die Simulation des Arbeitsschrittes Daten, die aus dem digitalen Zwilling des adaptierbaren Arbeitsaggregats abgeleitet werden, als weitere Eingangsgrößen der Simulation berücksichtigt, wird eine äußerst exakte Übereinstimmung von simuliertem und realer Durchführung des Arbeitsschrittes gewährleistet.

Gemäß einer vorteilhaften Weiterbildung der Erfindung ist vorgesehen, dass mindestens ein Optimierungsziel, insbesondere ein die Bodenschonung, den Durchsatz oder die Bearbeitungszeit betreffendes Optimierungsziel, nutzerspezifisch vorgegeben wird, wobei das mindestens eine Optimierungsziel als Randbedingung der Simulation dem mathematischen Modell des mindestens einen Arbeitsschrittes zugeführt wird.

Die Verwendung von Optimierungszielen als Randbedingung in der Simulation sorgt dafür, dass die Durchführung des Arbeitsschrittes im Hinblick auf eine spezifische durch den Nutzer, beispielsweise einen Landwirt oder Lohnunternehmer, dem die zu bearbeitende landwirtschaftliche Fläche, die autonome landwirtschaftliche Arbeitsmaschine und/oder ein hieran adaptierbares bzw. adaptiertes Arbeitsaggregat gehört, festlegbare Zielsetzung hin simuliert werden kann. Wird beispielsweise ein Optimierungsziel betreffend die Bodenschonung durch den Nutzer gewählt, so wird die an die Steuereinrichtung übermittelte Anweisung anders aussehen als würde ein Optimierungsziel betreffend den Durchsatz und/oder die Bearbeitungszeit gewählt. Es ist auch möglich, dass der Nutzer mehrere Optimierungsziele gewichtet vorgibt, so dass anteilig verschiedene Zielsetzungen in der Simulation der Durchführung des Arbeitsschrittes berücksichtigt werden und eine diese verschieden gewichteten Zielsetzungen berücksichtigende Anweisung als Ausgangsgröße der Simulation erzeugt wird, die dann von der Steuereinrichtung der autonomen landwirtschaftlichen Arbeitsmaschine zur Ansteuerung derselben zur realen Durchführung des Arbeitsschrittes dient.

Gemäß einer vorteilhaften Weiterbildung der Erfindung ist vorgesehen, dass die Anweisung zur Durchführung des Arbeitsschrittes eine Vorschrift, die eine von der autonomen landwirtschaftlichen Arbeitsmaschine abzufahren Route definiert, eine Vorschrift, die eine Ansteuerung von Arbeitsaggregat in der autonomen landwirtschaftlichen Arbeitsmaschine definiert, und/oder eine Vorschrift, die eine Ansteuerung mindestens eines an die autonome landwirtschaftliche Arbeitsmaschine adaptierten Arbeitsaggregat definiert, umfasst.

Je nach zu bearbeitender landwirtschaftlicher Fläche und hierfür zu nutzender autonomer landwirtschaftlicher Arbeitsmaschine sowie etwaigen Optimierungszielen, die nutzerspezifisch definiert werden, wird als Ausgangsgröße der Simulation durch die Verarbeitungseinrichtung eine für die Durchführung des Arbeitseinsatzes spezifische Anweisung erstellt, die eine oder mehrere verschiedene Vorschriften enthält, die dann von Steuereinrichtung der autonomen landwirtschaftlichen Arbeitsmaschine ausgeführt werden, um die entsprechenden Arbeitsaggregate der autonomen landwirtschaftlichen Arbeitsmaschine und/oder die an die autonome landwirtschaftliche Arbeitsmaschine adaptierten Arbeitsaggregate entsprechend der simulierten Durchführung des Arbeitsschrittes anzusteuern.

Gemäß einer vorteilhaften Weiterbildung der Erfindung ist vorgesehen, dass als, weitere, Ausgangsgröße der Simulation eine Anweisung zur Vorbereitung der autonomen landwirtschaftlichen Arbeitsmaschine im Hinblick auf die Durchführung des Arbeitsschrittes erzeugt wird, wobei die Anweisung an eine Person übermittelt wird, die die Anweisung zur Vorbereitung der autonomen landwirtschaftlichen Arbeitsmaschine ausführt.

Insbesondere umfasst die Anweisung zur Vorbereitung der autonomen landwirtschaftlichen Arbeitsmaschine eine Vorschrift, die eine Ballastdatierung der autonomen landwirtschaftlichen Arbeitsmaschine definiert, eine Vorschrift, die ein an die autonome landwirtschaftliche Arbeitsmaschine zu adaptieren des Arbeitsaggregat definiert, und/oder eine Vorschrift, die Betriebsmittel definiert, mit denen die autonome landwirtschaftliche Arbeitsmaschine und/oder das an die autonome landwirtschaftliche Arbeitsmaschine zu adaptierende Arbeitsaggregat zu versorgen ist.

Je nach zu bearbeitender landwirtschaftlicher Fläche und hierfür zu nutzender autonomer landwirtschaftlicher Arbeitsmaschine sowie etwaigen Optimierungszielen, die nutzerspezifisch definiert werden, wird somit als, weitere, Ausgangsgröße der Simulation durch die Verarbeitungseinrichtung eine zur Vorbereitung der autonomen landwirtschaftlichen Arbeitsmaschine im Hinblick auf die Durchführung des Arbeitsschrittes spezifische Anweisung erstellt, die eine oder mehrere verschiedene Vorschriften enthält, die dann von einer Person, beispielsweise dem Landwirt, als vorbereitende reale Maßnahme zur realen Durchführung des Arbeitsschrittes durch die autonome landwirtschaftliche Arbeitsmaschine, ausgeführt wird, um die autonome landwirtschaftliche Arbeitsmaschine selbst, entsprechende Arbeitsaggregate der autonomen landwirtschaftlichen Arbeitsmaschine und/oder an die autonome landwirtschaftliche Arbeitsmaschine adaptierte Arbeitsaggregate so vorzubereiten, dass die simulierte Durchführung des Arbeitsschrittes auch in der Realität durch die autonome landwirtschaftliche Arbeitsmaschine umgesetzt werden kann.

Gemäß der Erfindung ist vorgesehen, dass mittels einer Sensoreinrichtung während der Durchführung des Arbeitsschrittes durch die autonome landwirtschaftliche Arbeitsmaschine Echtzeitdaten generiert werden, die Betriebsparameter und/oder Umgebungsparameter der autonomen landwirtschaftlichen Arbeitsmaschine repräsentieren.

Gemäß der Erfindung werden die Echtzeitdaten an die Verarbeitungseinrichtung zur Anpassung des digitalen Abbilds der zu bearbeitenden landwirtschaftlichen Fläche und/oder des digitalen Abbilds der autonomen landwirtschaftlichen Arbeitsmaschine übermittelt. Vorzugsweise ergänzend hierzu verarbeitet die Steuereinrichtung der autonomen landwirtschaftlichen Arbeitsmaschine die Echtzeitdaten derart, dass die von der Verarbeitungseinrichtung übermittelte Anweisung zur Durchführung des Arbeitsschrittes durch die autonome landwirtschaftliche Arbeitsmaschine in Abhängigkeit der ermittelten Betriebsparameter und/oder Umgebungsparameter von der Steuereinrichtung der autonomen landwirtschaftlichen Arbeitsmaschine selbsttätig angepasst wird.

Das Übermitteln der Echtzeitdaten an die Verarbeitungseinrichtung erlaubt es, das digitale Abbild der zu bearbeitenden landwirtschaftlichen Fläche und/oder der autonomen landwirtschaftlichen Arbeitsmaschine stets an die realen aktuellen Gegebenheiten anzupassen. Wird beispielsweise anhand der Echtzeitdaten festgestellt, dass sich ein Hindernis in der Route der autonomen landwirtschaftlichen Arbeitsmaschine befindet, kann das digitale Abbild der zu bearbeitenden landwirtschaftlichen Fläche, die dieses Hindernis bisher nicht enthält, so modifiziert werden, dass dieses entsprechend dort verzeichnet wird und für zukünftige Simulationen von Arbeitsschritten berücksichtigt werden kann. Weiterhin kann die autonome landwirtschaftliche Arbeitsmaschine anhand der Verarbeitung der Echtzeitdaten durch die Steuereinrichtung auch unmittelbar auf situationsbedingte unvorhersehbare Ereignisse vor Ort während der Durchführung des Arbeitsschrittes selbsttätig reagieren, indem die von der Verarbeitungseinrichtung an die Steuereinrichtung der autonomen landwirtschaftlichen Arbeitsmaschine übermittelte Anweisung, die von der Steuereinrichtung ausgeführt in Echtzeit während ihrer Ausführung durch die Steuereinrichtung im Hinblick auf die vorliegenden Echtzeitdaten angepasst werden. Wird beispielsweise anhand der Echtzeitdaten festgestellt, dass sich ein Hindernis in der Route der autonomen landwirtschaftlichen Arbeitsmaschine befindet, kann die Steuereinheit die in der Anweisung enthaltene Route selbsttätig modifizieren, um dem Hindernis auszuweichen und anschließend wieder die in der Anweisung enthaltene Route aufzunehmen.

Gemäß einer vorteilhaften Weiterbildung der Erfindung umfasst das Verfahren weiterhin ein Simulieren des landwirtschaftlichen Arbeitsablaufs mit einer Abfolge an Arbeitsschritten durch die Verarbeitungseinrichtung, wobei als Ausgangsgröße der Simulation eines Arbeitsschrittes der Abfolge von Arbeitsschritten ein angepasstes digitales Abbild der zu bearbeitenden landwirtschaftlichen Fläche erzeugt wird, das in der Datenbank gespeichert wird, wobei in der Datenbank digitale Abbilder einer Vielzahl an autonomen landwirtschaftlichen Arbeitsmaschinen gespeichert sind, wobei aus den angepassten digitalen Abbildern der zu bearbeitenden landwirtschaftlichen Fläche und den digitalen Abbildern der Vielzahl an autonomen landwirtschaftlichen Arbeitsmaschinen Daten abgeleitet werden, die als Eingangsgrößen einem jeweiligen für die Simulation eines Arbeitsschrittes verwendeten mathematischen Modell des Arbeitsschrittes zugeführt werden, und wobei als Ausgangsgröße jeder Simulation eines Arbeitsschrittes der Abfolge von Arbeitsschritten eine Anweisung zur Durchführung des Arbeitsschrittes durch zumindest eine der Vielzahl an autonomen landwirtschaftlichen Arbeitsmaschinen (6) erzeugt wird.

Somit kann ein gesamter landwirtschaftlicher Arbeitsablauf, der eine Vielzahl an aufeinanderfolgenden Arbeitsschritten umfasst, mittels der Verarbeitungseinrichtung simuliert werden, wobei eine ganze Flotte an autonomen Fahrzeugen berücksichtigt werden kann. Das digitale Abbild der zu bearbeitenden landwirtschaftlichen Arbeitsmaschine wird nach jeder Simulation eines Arbeitsschrittes entsprechend dem nach der simulierten Durchführung des Arbeitsschrittes vorliegenden Zustand angepasst, so dass eine folgende Simulation eines sich anschließenden Arbeitsschrittes immer den passenden Zustand der zu bearbeitenden landwirtschaftlichen Fläche berücksichtigt. Die verschiedenen digitalen Abbilder der zu bearbeitenden Fläche können in der Datenbank gespeichert werden, so dass auf diese für erneute Simulationen oder Auswertungen zugegriffen werden kann. Nach jeder Simulation eines Arbeitsschrittes wird als Ausgangsgröße der Simulation eine Anweisung für zumindest eine der Vielzahl an autonomen landwirtschaftlichen Arbeitsmaschinen erstellt, die in der Simulation berücksichtigt wurde. Die Anweisung wird dann an die Steuereinrichtung der entsprechenden autonomen landwirtschaftlichen Arbeitsmaschine übermittelt, so dass diese von der Steuereinrichtung ausgeführt werden kann und die autonome landwirtschaftliche Arbeitsmaschine den vorab simulierten Arbeitsschritt in der Realität auf der zu bearbeitenden landwirtschaftlichen Fläche umsetzt.

Gemäß einer vorteilhaften Weiterbildung der Erfindung ist vorgesehen, dass die Simulation des Arbeitsschrittes mittels einer mit der Verarbeitungseinrichtung verbundenen Anzeigeeinrichtung grafisch dargestellt wird.

Hierdurch kann zeitgleich mit der Durchführung der Simulation diese für den Nutzer bildlich dargestellt werden, sodass dieser dem Ablauf bereits während der Simulation folgen kann, um etwaige ungewünschte Unregelmäßigkeiten visuell bereits vor der realen Durchführung des Arbeitsschrittes durch die autonome landwirtschaftliche Arbeitsmaschine zu identifizieren und entsprechende Anpassungen, beispielsweise am für die Simulation verwendeten mathematischen Modell eines Arbeitsschrittes, vorzunehmen. Die digitalen Abbilder der zu bearbeitenden landwirtschaftlichen Fläche, der autonomen landwirtschaftlichen Arbeitsmaschine und etwaiger an die autonome landwirtschaftliche Arbeitsmaschine adaptierter Arbeitsaggregate umfassen neben den zahlreichen Daten auch ein exaktes dreidimensionales Abbild der Realität, so dass diese dreidimensionalen Abbilder gemeinsam und wechselwirkend miteinander während der Simulation der Durchführung des Arbeitsschrittes für den Nutzer bildlich entsprechend dem jeweiligen Zeitpunkt während der Durchführung des Arbeitsschrittes dargestellt werden.

Die erfindungsgemäße Aufgabe wird ferner durch ein Computerprogrammprodukt gemäß dem unabhängigen Patentanspruch 14 und durch die Verwendung eines Computerprogrammprodukts gemäß dem unabhängigen Anspruch 15 gelöst.

Demnach betrifft die Erfindung somit ebenfalls ein Computerprogrammprodukt, das Befehle umfasst, die bei der Ausführung des Programms durch eine Verarbeitungseinrichtung diese anlassen, dass zuvor beschriebene erfindungsgemäße Verfahren zum Erzeugen von Daten zur Steuerung einer autonomen landwirtschaftlichen Arbeitsmaschine auszuführen.

Gemäß Anspruch 15 ist vorgesehen, dass das Ausführen des Programms durch die Verarbeitungseinrichtung bei einer vorliegenden Berechtigung freigeschaltet ist.

Das Programm, dass die Verarbeitungseinrichtung dazu befähigt, das erfindungsgemäße Verfahren auszuführen, kann demnach durch die Bezahlung einer Gebühr von einem Dienstleister, der dieses anbietet, für den Nutzer freigeschaltet werden.

Die vorliegende Erfindung wird nachstehend anhand eines in der Figur dargestellten Ausführungsbeispiels näher erläutert.

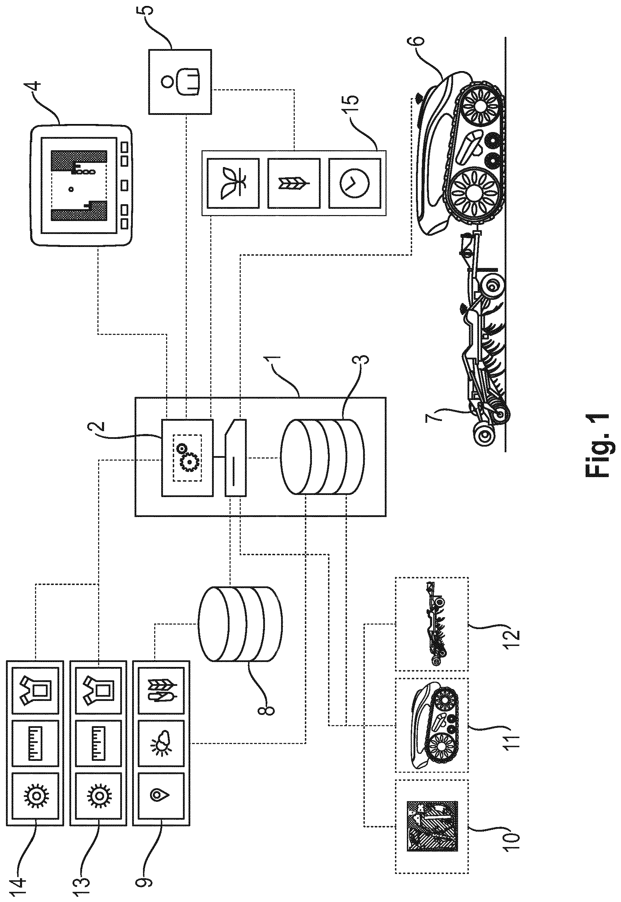

FIG. 1 zeigt ein datenbankbasiertes Verwaltungssystem 1, das eine Verarbeitungseinrichtung 2 und eine mit dieser zur Übertragung von Daten verbundene Datenbank 3 umfasst. Die Datenbank 3 kann als zentrale Datenbank 3 oder aber als dezentrale, also verteilte, Datenbank 3 ausgebildet sein. Ist die Datenbank 3 als dezentrale Datenbank 3 ausgebildet, so ist sie vorzugsweise als Blockchain-Datenbank 3 ausgebildet. Auch ist es möglich, dass die Datenbank 3 als cloudbasierte Datenbank 3 implementiert ist. Mit der Verarbeitungseinrichtung 2 kann zudem eine Anzeigeeinrichtung 4 verbunden sein, die entweder Teil des Verwaltungssystems 1 oder unabhängig von dem Verwaltungssystem 1 ist. Die Anzeigeeinrichtung 4 ist dazu eingerichtet, verschiedene von der Verarbeitungseinrichtung 2 erzeugte oder übermittelte grafische Darstellungen einem Nutzer 5 des Verwaltungssystems 1, beispielsweise einem Landwirt oder einem Lohnunternehmer, dem eine oder mehrere autonome landwirtschaftliche Arbeitsmaschinen 6, eine oder mehrere daran adaptierbare bzw. adaptierte Arbeitsaggregate 7 und/oder eine oder mehrere landwirtschaftliche Flächen, auf denen ein landwirtschaftlicher Arbeitsablauf mit einer Abfolge an Arbeitsschritten durchgeführt werden soll, gehört, anzuzeigen. Die Verarbeitungseinrichtung 2 kann weiterhin mit einer Referenzdatenbank 8 zur Übertragung von Daten verbunden sein, in der Referenzdaten 9 hinterlegt sein können, auf die die Verarbeitungseinrichtung 2 zugreifen kann. Die Kommunikation der verschiedenen Einrichtungen, Einheiten, Maschinen und Aggregate 1, 2, 3, 4, 6, 7, 8, 9 miteinander zur Übertragung von Daten kann wahlweise kabelgebunden und/oder drahtlos erfolgen.

Bezugnehmend auf die zuvor beschriebenen Einrichtungen wird nachfolgend das erfindungsgemäße Verfahren zum Erzeugen von Daten zur Steuerung einer autonomen landwirtschaftlichen Arbeitsmaschine 6 im Detail beschrieben.

Wie bereits eingangs angedeutet sind für die Steuerung von autonomen landwirtschaftlichen Arbeitsmaschinen 6 keine Bediener vorgesehen, die Kenntnisse über einen auszuführenden landwirtschaftlichen Arbeitsablauf mit einer Abfolge an Arbeitsschritten haben. Vielmehr sind die autonomen landwirtschaftlichen Arbeitsmaschinen 6 an und für sich erst einmal "unwissend", also nicht dazu in der Lage, einen oder mehrere spezifische Arbeitsschritte der Abfolge von Arbeitsschritten selbsttätig, also autonom, auszuführen. Mit anderen Worten, solange die autonomen landwirtschaftlichen Arbeitsmaschinen 6 keine Anweisungen erlangen, die sie dazu befähigen, den Arbeitsschritt oder die Arbeitsschritte des Arbeitsablaufs durchzuführen, sind diese hierzu nicht in der Lage. Damit die autonomen landwirtschaftlichen Arbeitsmaschinen 6 in der Lage sind einen Arbeitsschritt autonom auszuführen, müssen demnach Anweisungen erzeugt werden, die an die autonomen landwirtschaftlichen Arbeitsmaschinen 6 übermittelt werden, so dass diese einen Arbeitsschritt auf einer zu bearbeitenden landwirtschaftlichen Fläche selbsttätig, also autonom, durchführen können.

Erfindungsgemäß ist nun vorgesehen, dass mittels der Verarbeitungseinrichtung 2 ein digitales Abbild 10 einer von der autonomen landwirtschaftlichen Arbeitsmaschine 6 zu bearbeitenden landwirtschaftlichen Fläche generiert bzw. erzeugt und dieses in der mit der Verarbeitungseinrichtung 2 zur Übertragung von Daten verbundenen bzw. kommunizierenden Datenbank 3 gespeichert wird. Weiterhin wird mittels der Verarbeitungseinrichtung 2 ein digitales Abbild 11 einer autonomen landwirtschaftlichen Arbeitsmaschine 6 generiert bzw. erzeugt und dieses ebenfalls in der mit der Verarbeitungseinrichtung 2 zur Übertragung von Daten verbundenen bzw. kommunizierenden Datenbank 3 gespeichert. Sowohl das digitale Abbild 10 der zu bearbeitenden landwirtschaftlichen Fläche als auch das digitale Abbild 11 der autonomen landwirtschaftlichen Arbeitsmaschine 6 stellen jeweils einen sogenannten digitalen Zwilling der realen Strukturen, also der realen landwirtschaftlichen Fläche und der realen autonomen landwirtschaftlichen Arbeitsmaschine 6 dar, der die spezifischen Charakteristika der realen Strukturen identisch wiedergibt. Neben den digitalen Abbild 10 der zu bearbeitenden landwirtschaftlichen Fläche und dem digitalen Abbild 11 der autonomen landwirtschaftlichen Arbeitsmaschine 6 kann mittels der Verarbeitungseinrichtung 2 ein weiteres digitales Abbild 12 eines an die autonome landwirtschaftliche Arbeitsmaschine 6 adaptierbaren Arbeitsaggregats 7, beispielsweise eines Grubbers oder Pflugs, generiert bzw. erzeugt werden, welches anschließend ebenfalls in der mit der Verarbeitungseinrichtung 2 zur Übertragung von Daten verbundenen bzw. kommunizierenden Datenbank 3 gespeichert wird. Die digitalen Abbilder 10, 11, 12 können lediglich als digitale Datenmodelle ausgebildet sein, optional aber auch ein dreidimensionales virtuelles Abbild der realen Strukturen umfassen, anhand dessen grafisch die verschiedenen Merkmale dieser Strukturen für den Nutzer 5 sichtbar werden.

Für das Generieren des digitalen Abbilds 10 der zu bearbeitenden landwirtschaftlichen Fläche greift die Verarbeitungseinrichtung 2 auf die bereits zuvor erwähnten Referenzdaten 9 zu, die agronomische Daten, wie Bodendaten (einschließlich Daten zur Bodenverdichtung, Daten zur Bodenaufbereitung), Bestandsdaten (einschließlich pflanzenbaulicher Spezifika, wie Daten zur Verunkrautung, Daten zu Krankheiten und Daten zu einem Schädlingsbefall), Ertragsdaten und/oder Flächendaten (einschließlich landwirtschaftlicher Kennzahlen, wie Daten zur Düngung, Daten zur Bewässerung, Daten zu Herbiziden und Daten zu Fungiziden), Geodaten und/oder Wetterdaten (einschließlich langfristigerer Klimadaten) umfasst. Die Referenzdaten 9 sind wie bereits zuvor erwähnt in der Referenzdatenbank 8 oder in der Datenbank 3 des Verwaltungssystems 1 durch die Verarbeitungseinrichtung 2 abrufbar hinterlegt.

Für das Generieren des digitalen Abbilds 11 der autonomen landwirtschaftlichen Arbeitsmaschine 6 greift die Verarbeitungseinrichtung 2 auf Daten 13 der autonomen landwirtschaftlichen Arbeitsmaschine 6 zu. Diese Daten 13 werden insbesondere durch Geometriedaten, Betriebszustandsdaten und/oder Ausstattungsdaten der autonomen landwirtschaftlichen Arbeitsmaschine 6 gebildet. So können die Daten 13 beispielsweise Daten zu den in der autonomen landwirtschaftlichen Arbeitsmaschine 6 vorhandenen Arbeitsaggregaten, Daten zu den Maßen der autonomen landwirtschaftlichen Arbeitsmaschine 6, Daten zu Füllständen von Betriebsmitteln der autonomen landwirtschaftlichen Arbeitsmaschine 6, Daten zu Verschleißzuständen der in der autonomen landwirtschaftlichen Arbeitsmaschine 6 vorhandenen Arbeitsaggregate oder dergleichen umfassen.

Für das Generieren des digitalen Abbilds 12 eines an die autonome landwirtschaftliche Arbeitsmaschine 6 adaptierbaren Arbeitsaggregats 7 greift die Verarbeitungseinrichtung 2 auf Daten 14 des an die autonome landwirtschaftliche Arbeitsmaschine 6 adaptierbaren Arbeitsaggregats 7 zu. Diese Daten 14 werden insbesondere ebenfalls durch Geometriedaten, Betriebszustandsdaten und/oder Ausstattungsdaten des Arbeitsaggregat 7 gebildet. So können die Daten 14 beispielsweise ebenfalls Daten zu den in dem Arbeitsaggregat 7 vorhandenen Komponenten, Daten zu den Maßen des Arbeitsaggregats 7, Daten zu Füllständen von Betriebsmitteln des Arbeitsaggregats 7, Daten zu Verschleißzuständen der in dem Aggregat 7 vorhandenen Komponenten oder dergleichen umfassen.

Um eine Anweisung zu erzeugen, die die autonome landwirtschaftliche Arbeitsmaschine 6 dazu befähigt, einen Arbeitsschritt auf einer landwirtschaftlichen Fläche in der Realität durchzuführen wird mittels der Verarbeitungseinrichtung 2 ein solcher Arbeitsschritt eines einer Abfolge an Arbeitsschritten umfassenden landwirtschaftlichen Arbeitsablaufs vor der realen Durchführung desselben durch die autonome landwirtschaftliche Arbeitsmaschine 6 zunächst digital simuliert. Hierzu greift die Verarbeitungseinrichtung 2 auf ein mathematisches Modell eines solchen Arbeitsschrittes sowie auf die generierten und gespeicherten Abbilder 10, 11 der zu bearbeitenden landwirtschaftlichen Fläche und der autonomen landwirtschaftlichen Arbeitsmaschine 6 zu, wobei anhand des mathematischen Modells des Arbeitsschrittes der entsprechende Arbeitsschritt simuliert wird. Das mathematische Modell des Arbeitsschrittes bildet demnach als ein für die Simulation notwendiges Ausgangsmodell. Damit die Simulation des Arbeitsschrittes durchgeführt werden kann, werden aus dem digitalen Abbild 10 der zu bearbeitenden landwirtschaftlichen Fläche und dem digitalen Abbild 11 der autonomen landwirtschaftlichen Arbeitsmaschine 6 Daten abgeleitet, die als Eingangsgrößen der Simulation dem mathematischen Modell des Arbeitsschrittes zugeführt werden. Als Ausgangsgröße der Simulation wird eine Anweisung zur Durchführung des Arbeitsschrittes durch die autonome landwirtschaftliche Arbeitsmaschine 6 erzeugt, mittels der die autonome landwirtschaftliche Arbeitsmaschine 6 dazu befähigt wird, den Arbeitsschritt in der Realität auf der landwirtschaftlichen Fläche durchzuführen.

Das mathematische Modell des Arbeitsschrittes definiert die Zusammenhänge der verschiedenen Eingangsgrößen bzw. definiert wechselwirkende Verknüpfungen der verschiedenen Eingangsgrößen im Hinblick auf die Durchführung eines spezifischen Arbeitsschrittes. Anhand des mathematischen Modells des Arbeitsschrittes werden demnach während der Simulation die als Eingangsgrößen aus dem digitalen Abbild 10 der zu bearbeitenden landwirtschaftlichen Fläche und dem digitalen Abbild 11 der autonomen landwirtschaftlichen Arbeitsmaschine 6 abgeleiteten Daten derart spezifisch im Hinblick auf einen bestimmten Arbeitsschritt verarbeitet, dass eine spezifische Vorschrift für die Durchführung des Arbeitsschritts durch die autonome landwirtschaftliche Arbeitsmaschine 6 in der Realität als Ausgangsgröße erzeugt wird. Je nachdem was für ein Arbeitsschritt durch die Verarbeitungseinrichtung 2 simuliert werden soll, wird ein für diesen Arbeitsschritt spezifisches mathematisches Modell von der Verarbeitungseinrichtung 2 verwendet. Soll beispielsweise als Arbeitsschritt ein Pflügen der landwirtschaftlichen Fläche durch die autonome landwirtschaftliche Arbeitsmaschine 6 simuliert werden, wählt die Verarbeitungseinrichtung 2 einen für die Simulation des Arbeitsschrittes "Pflügen" spezifisches mathematisches Modell aus einem zur Verfügung stehenden Portfolio an mathematischen Modellen von Arbeitsschritten aus, mittels dem die aus dem digitalen Abbild 10 der zu bearbeitenden landwirtschaftlichen Fläche und dem digitalen Abbild 11 der autonomen landwirtschaftlichen Arbeitsmaschine 6 abgeleiteten Daten als Eingangsgrößen der Simulation derart verarbeitet werden, dass die für die Durchführung des Arbeitsschrittes "Pflügen" spezifische Anweisung als Ausgangsgröße für die autonome landwirtschaftliche Arbeitsmaschine 6 erzeugt wird.

Das mathematische Modell kann dabei auf einfachen und/oder komplexen mathematischen Gleichungssystemen, die die entsprechenden prozessspezifischen Zusammenhänge von Eingangsgrößen definieren, und auf Algorithmen zur Lösung dieser Gleichungssysteme basieren. Insbesondere können die zur Lösung der Gleichungssysteme verwendeten Algorithmen auf einer künstlichen Intelligenz, vorzugsweise einem künstlichen neuronalen Netz, basieren. Sofern für die Durchführung des Arbeitsschrittes auf der zu bearbeitenden landwirtschaftlichen Fläche ein Arbeitsaggregat 7 an die autonome landwirtschaftliche Arbeitsmaschine 6 zu adaptieren ist, werden aus dem digitalen Abbild 12 des adaptierbaren Arbeitsaggregats 7 ebenfalls Daten abgeleitet, die als weitere Eingangsgrößen der Simulation dem mathematischen Modell des Arbeitsschrittes zugeführt werden.

Die nach Abschluss der Simulation durch die Verarbeitungseinrichtung 2 als Ausgangsgröße erhaltene Anweisung zur Durchführung des Arbeitsschrittes durch die autonome landwirtschaftliche Arbeitsmaschine 6 wird an eine - in FIG. 1 nicht dargestellte - Steuereinrichtung der - realen - autonome landwirtschaftliche Arbeitsmaschine 6, vorzugsweise drahtlos, übermittelt und von dieser ausgeführt. Hierdurch wird die autonome landwirtschaftliche Arbeitsmaschine 6 dazu befähigt, den vorher simulierten Arbeitsschritt des landwirtschaftlichen Arbeitsablaufs selbsttätig, also autonom, auf der landwirtschaftlichen Fläche in der Realität durchzuführen.

Die aus der Simulation erhaltene Anweisung zur Durchführung des Arbeitsschrittes durch die autonome landwirtschaftliche Arbeitsmaschine 6 umfasst eine oder mehrere Vorschriften, die die Steuereinrichtung der autonomen landwirtschaftlichen Arbeitsmaschine 6 zur Ansteuerung der autonomen landwirtschaftlichen Arbeitsmaschine 6 nach Übermittlung der Anweisung verarbeitet. Die Anweisung kann eine Vorschrift, die eine von der autonomen landwirtschaftlichen Arbeitsmaschine 6 während der Durchführung des Arbeitsschrittes abzufahren Route definiert, eine Vorschrift, die eine Ansteuerung von Arbeitsaggregaten in der autonomen landwirtschaftlichen Arbeitsmaschine 6 definiert, und/oder eine Vorschrift, die eine Ansteuerung mindestens eines an die autonome landwirtschaftliche Arbeitsmaschine 6 adaptierten Arbeitsaggregats 7 definiert, umfassen. Somit kann in Abhängigkeit des vorab durch die Verarbeitungseinrichtung 2 simulierten Arbeitsschrittes eine spezifische Anweisung an die autonome landwirtschaftliche Arbeitsmaschine 6 übermittelt und von der Steuereinrichtung der autonomen landwirtschaftlichen Arbeitsmaschine 6 ausgeführt werden, so dass sichergestellt ist, dass die Durchführung des Arbeitsschrittes in der Realität entsprechend der simulierten Durchführung abläuft.

Neben der Anweisung zur Durchführung des Arbeitsschrittes durch die autonome landwirtschaftliche Arbeitsmaschine 6 kann als weitere Ausgangsgröße der Simulation eine Anweisung zur Vorbereitung der autonomen landwirtschaftlichen Arbeitsmaschine 6 im Hinblick auf die Durchführung des Arbeitsschrittes durch die Verarbeitungseinrichtung 2 erzeugt werden. Diese Anweisung wird nach ihrer Erzeugung an eine Person, insbesondere den Nutzer 5 des Verwaltungssystems 1, übermittelt, der die entsprechend übermittelte Anweisung zur Vorbereitung der autonomen landwirtschaftlichen Arbeitsmaschine 6 im Hinblick auf die Durchführung des Arbeitsschrittes ausführt.

Die aus der Simulation erhaltene weitere Anweisung zur Vorbereitung der autonomen landwirtschaftlichen Arbeitsmaschine 6 im Hinblick auf die Durchführung des Arbeitsschrittes umfasst ebenfalls eine oder mehrere Vorschriften, die von der Person ausgeführt werden. Die weitere Anweisung kann eine Vorschrift, die eine Ballastierung der autonomen landwirtschaftlichen Arbeitsmaschine 6 definiert, eine Vorschrift, die ein an die autonome landwirtschaftliche Arbeitsmaschine 6 zu adaptierendes Arbeitsaggregat 7 definiert, und/oder eine Vorschrift, die Betriebsmittel definiert, mit denen die autonome landwirtschaftliche Arbeitsmaschine 6 und/oder das an die autonome landwirtschaftliche Arbeitsmaschine zu adaptierende bzw. adaptierte Arbeitsaggregat 7 zu versorgen ist, umfassen. Als Betriebsmittel werden im Rahmen der vorliegenden Erfindung sämtliche Stoffe angesehen, die für den Betrieb der autonomen landwirtschaftlichen Arbeitsmaschine 6 erforderlich sind, beispielsweise Kraftstoffe, Schmierstoffe, Hydraulikfluide oder dergleichen, sowie sämtliche Stoffe, die für den Betrieb des an die autonome landwirtschaftliche Arbeitsmaschine 6 zu adaptierenden bzw. adaptierten Arbeitsaggregats 7 erforderlich sind, beispielsweise Kraftstoffe, Schmiermittel, Hydraulikfluide, Düngemittel, Saatgut, Pflanzenschutzmittel oder dergleichen.

Der Simulation des Arbeitsschrittes kann weiterhin neben den zuvor erwähnten digitalen Abbildern bzw. den hieraus abgeleiteten Daten mindestens ein Optimierungsziel 15 zugrunde gelegt werden. Das Optimierungsziel 15 ist ein nutzerspezifisch vorgebbares Optimierungsziel 15, das als Randbedingung der Simulation dem mathematischen Modell des Arbeitsschrittes, falls vorgegeben, zugeführt wird. Das Optimierungsziel 15 ist vorzugsweise ein die Bodenschonung, den Durchsatz oder die Bearbeitungszeit betreffendes Optimierungsziel 15. Es ist möglich das der Nutzer 5 mehrere solcher Optimierungsziele 15 als Randbedingungen in der Simulation vorgibt. Hierbei ist es möglich, dass die von dem Nutzer 5 vorgegebenen Optimierungsziele 15 untereinander durch den Nutzer 5 gewichtet werden. Sofern ein solches Optimierungsziel 15 von einem Nutzer 5 als zu berücksichtigende Randbedingung der Simulation vorgegeben wird, wird die Simulation des Arbeitsschrittes mit der Zielsetzung durchgeführt, das vorgegebene Optimierungsziel 15 bzw. die vorgegebenen Optimierungsziele 15 entsprechend ihrer Gewichtung zu erreichen. Die als Ausgangsgröße erhaltene Anweisung zur Durchführung des Arbeitsschrittes durch die autonome landwirtschaftliche Arbeitsmaschine 6 und die Anweisung zur Vorbereitung der autonomen landwirtschaftlichen Arbeitsmaschine 6 im Hinblick auf die Durchführung des Arbeitsschrittes spiegelt dann ebenfalls die Einhaltung des/der Optimierungsziele 15 wieder.

Befindet sich die autonome landwirtschaftliche Arbeitsmaschine 6 gegebenenfalls mit einem an diese adaptierten Arbeitsaggregat 7 in der realen Durchführung des vorab simulierten Arbeitsschrittes, kann mittels einer - in FIG. 1 nicht dargestellten - Sensoreinrichtung, die einen oder mehrere Sensoren umfasst, die wiederum an der autonomen landwirtschaftliche Arbeitsmaschine 6, an dem adaptierten Arbeitsaggregat 7 oder an einer - in FIG. 1 nicht dargestellten - sich in unmittelbarer Nähe zur autonomen landwirtschaftlichen Arbeitsmaschine 6 befindlichen Einrichtung, insbesondere einer Drohne, angeordnet sind, Echtzeitdaten generiert werden, die Betriebsparameter und/oder Umgebungsparameter der autonomen landwirtschaftlichen Arbeitsmaschine 6 repräsentieren.

Diese Echtzeitdaten können von der Sensoreinrichtung unmittelbar an die Verarbeitungseinrichtung 2 zur Anpassung des digitalen Abbilds 10 der zu bearbeitenden landwirtschaftlichen Fläche, des digitalen Abbilds 11 der autonomen landwirtschaftliche Arbeitsmaschine 6 und/oder des digitalen Abbilds 12 des an die autonome landwirtschaftliche Arbeitsmaschine 6 adaptierbaren Arbeitsaggregats 7 übermittelt werden.

Ergänzend oder alternativ hierzu können die Echtzeitdaten von der Sensoreinrichtung an die Steuereinrichtung der autonomen landwirtschaftlichen Arbeitsmaschine 6 übermittelt werden und derart von dieser verarbeitet werden, dass die von der Verarbeitungseinrichtung 2 übermittelte Anweisung zur Durchführung des Arbeitsschrittes durch die autonome landwirtschaftliche Arbeitsmaschine 6 in Abhängigkeit der ermittelten Betriebsparameter und/oder Umgebungsparameter von der Steuereinrichtung der autonomen landwirtschaftlichen Arbeitsmaschine 6 selbsttätig während der Durchführung des Arbeitsschrittes angepasst wird.

Das erfindungsgemäße Verfahren ist nicht nur auf die einmalige Simulation eines Arbeitsschrittes durch die Verarbeitungseinrichtung 2 beschränkt. Vielmehr kann es vorgesehen sein, dass ein gesamter landwirtschaftlicher Arbeitsablauf mit einer Vielzahl an aufeinanderfolgenden Arbeitsschritten von der Verarbeitungseinrichtung 2 simuliert werden soll. Hierbei wird neben den zuvor erwähnten Anweisungen als Ausgangsgröße der Simulation ein jeweils angepasstes digitales Abbild 10 der zu bearbeitenden landwirtschaftlichen Fläche erzeugt, das in der Datenbank 3 gespeichert wird. Das angepasste digitale Abbild 10 der zu bearbeitenden landwirtschaftlichen Fläche spiegelt den Zustand der landwirtschaftlichen Fläche wieder, der nach der Simulation des Arbeitsschrittes vorliegt. Eine auf den simulierten Arbeitsschritt folgende Simulation eines weiteren sich anschließenden Arbeitsschrittes wird dann anhand eines hierfür spezifischen mathematischen Modells des Arbeitsschrittes von der Verarbeitungseinrichtung 2 durchgeführt, wobei Daten aus dem jeweils angepassten digitalen Abbild 10 der zu bearbeitenden landwirtschaftlichen Fläche abgeleitet werden, die als Eingangsgrößen dieser Simulation diesem mathematischen Modell des Arbeitsschrittes zugeführt werden. In der Datenbank 3 sind weiterhin digitaler Abbilder 11 einer Vielzahl an autonomen landwirtschaftlichen Arbeitsmaschinen 6 gespeichert, wobei aus diesen digitalen Abbildern 11 der Vielzahl autonomen landwirtschaftlichen Arbeitsmaschine 6 entsprechend Daten abgeleitet werden, die ebenfalls als Eingangsgrößen der jeweiligen Simulation dem entsprechenden mathematischen Modell des entsprechenden Arbeitsschrittes zugeführt werden. So können für jeden zu simulierenden Arbeitsschritt des Arbeitsablaufs Daten einer entsprechenden bei der Durchführung des Arbeitsschrittes vorliegenden zu bearbeitenden landwirtschaftlichen Fläche und einer entsprechenden für die Durchführung zu nutzenden autonomen landwirtschaftlichen Arbeitsmaschine 6 abgeleitet werden und als Eingangsgrößen der Simulation des jeweiligen Arbeitsschrittes verwendet werden. Als Ausgangsgröße einer jeden Simulation eines Arbeitsschrittes wird eine Anweisung zur Durchführung des jeweiligen Arbeitsschrittes durch zumindest eine der Vielzahl an autonomen landwirtschaftliche Arbeitsmaschinen 6 erzeugt. Auch hier können optional, also falls nötig, als Eingangsgrößen dem mathematischen Modell des Arbeitsschritts Daten zugeführt werden, die aus digitalen Abbildern 12 einer Vielzahl an in der Datenbank 3 hinterlegten digitalen Abbildern 12 von an die autonomen landwirtschaftlichen Arbeitsmaschinen 6 adaptierbaren Arbeitsaggregaten 7 abgeleitet werden. Auch kann eine Anweisung zur Vorbereitung der autonomen landwirtschaftlichen Arbeitsmaschine 6 im Hinblick auf die Durchführung des Arbeitsschrittes als Ausgangsgröße der Simulation erzeugt werden.

Weiterhin besteht die Möglichkeit, dass der Nutzer 5 die Simulation des Arbeitsschrittes bildlich verfolgen kann. Hierzu wird die Simulation des Arbeitsschrittes mittels der mit der Verarbeitungseinrichtung 2 verbundenen Anzeigeeinrichtung 4 grafisch dargestellt. Damit dies möglich wird, umfassen die digitalen Abbilder 10, 11, 12 wie bereits erwähnt ein dreidimensionales digitales Abbild der entsprechenden realen Struktur, so dass diese dreidimensionalen digitalen Abbilder gemeinsam und wechselwirkend miteinander während der Simulation der Durchführung des Arbeitsschrittes für den Nutzer 5 bildlich entsprechend dem jeweiligen Zeitpunkt während der Durchführung des Arbeitsschrittes dargestellt werden.

Die Anzeigeeinrichtung 4 kann beispielsweise Bestandtteil eines Tablets, tragbaren Computers und/oder Smartphones sein, das mit der Verarbeitungseinrichtung 2 kommuniziert.

Weiterhin ist ein - in FIG. 1 nicht dargestelltes - Computerprogrammprodukt vorgesehen, dass Befehle umfasst, die bei der Ausführung des Programms durch die Verarbeitungseinrichtung 2 diese dazu veranlassen, das zuvor beschriebene erfindungsgemäße Verfahren auszuführen. Das Ausführen des Programms durch die Verarbeitungseinrichtung 2 kann bei einer vorliegenden Berechtigung freigeschaltet werden. Beispielsweise kann eine solche Freischaltung durch die Bezahlung einer Gebühr von dem Nutzer 5 an einen Dienstleister, der dieses Programm anbietet, für den Nutzer 5 zur Verwendung freigeschaltet werden.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Verwaltungssystem
- 2: Verarbeitungseinrichtung
- 3: Datenbank
- 4: Anzeigeeinrichtung
- 5: Nutzer
- 6: autonome landwirtschaftliche Arbeitsmaschine
- 7: adaptierbares/adaptiertes Arbeitsaggregat
- 8: Referenzdatenbank
- 9: Referenzdaten
- 10: digitales Abbild einer zu bearbeitenden landwirtschaftlichen Fläche
- 11: digitales Abbild der autonomen landwirtschaftlichen Arbeitsmaschine
- 12: digitales Abbild eines adaptierbaren Arbeitsaggregats
- 13: Daten der autonomen landwirtschaftlichen Arbeitsmaschine
- 14: Daten des adaptierbaren/adaptierten Arbeitsaggregats
- 15: Optimierungsziel

## Patentansprüche

1. Verfahren zum Erzeugen von Daten zur Steuerung einer autonomen landwirtschaftlichen Arbeitsmaschine (6), die folgenden Verfahrensschritte umfassend:
- Generieren eines digitalen Abbilds (10) einer zu bearbeitenden landwirtschaftlichen Fläche in Form eines digitalen Zwillings durch eine Verarbeitungseinrichtung (2) und Speichern des digitalen Abbilds (10) der zu bearbeitenden landwirtschaftlichen Fläche in einer mit der Verarbeitungseinrichtung (2) zur Übertragung von Daten verbundenen Datenbank (3);
- Generieren eines digitalen Abbilds (11) der autonomen landwirtschaftlichen Arbeitsmaschine (6) in Form eines digitalen Zwillings durch die Verarbeitungseinrichtung (2) und Speichern des digitalen Abbilds (11) der autonomen landwirtschaftlichen Arbeitsmaschine (6) in der Datenbank (3);
- Simulieren mindestens eines Arbeitsschrittes eines eine Abfolge an Arbeitsschritten umfassenden landwirtschaftlichen Arbeitsablaufs anhand eines mathematischen Modells des mindestens einen Arbeitsschrittes durch die Verarbeitungseinrichtung (2), wobei aus dem digitalen Abbild (10) der zu bearbeitenden landwirtschaftlichen Fläche und dem digitalen Abbild (11) der autonomen landwirtschaftlichen Arbeitsmaschine (6) Daten abgeleitet werden, die als Eingangsgrößen der Simulation dem mathematischen Modell des mindestens einen Arbeitsschrittes zugeführt werden, und wobei als Ausgangsgröße der Simulation eine Anweisung zur Durchführung des Arbeitsschrittes durch die autonome landwirtschaftliche Arbeitsmaschine (6) erzeugt wird; und
- Übermitteln der als Ausgangsgröße der Simulation erzeugten Anweisung an eine Steuereinrichtung der autonomen landwirtschaftlichen Arbeitsmaschine (6) und Ausführen der Anweisung durch die Steuereinrichtung der autonomen landwirtschaftlichen Arbeitsmaschine (6);
wobei mittels einer Sensoreinrichtung während der Durchführung des Arbeitsschrittes durch die autonome landwirtschaftliche Arbeitsmaschine (6) Echtzeitdaten generiert werden, die Betriebsparameter und/oder Umgebungsparameter der autonomen landwirtschaftlichen Arbeitsmaschine (6) repräsentieren;
wobei die Echtzeitdaten an die Verarbeitungseinrichtung (2) zur Anpassung des digitalen Abbilds (10) der zu bearbeitenden landwirtschaftlichen Fläche und/oder des digitalen Abbilds (11) der autonomen landwirtschaftlichen Arbeitsmaschine (6) übermittelt werden.

2. Verfahren nach Anspruch 1, **dadurch gekennzeichnet, dass** die Verarbeitungseinrichtung (2) zum Generieren des digitalen Abbilds (10) der zu bearbeitenden landwirtschaftlichen Fläche auf Referenzdaten (9) zugreift, wobei die Referenzdaten (9) agronomische Daten, insbesondere Bodendaten, Bestandsdaten, Ertragsdaten und/oder Flächendaten, Geodaten und/oder Wetterdaten sind, wobei die Referenzdaten (9) in der Datenbank (3) und/oder in einer von der Datenbank unabhängigen Referenzdatenbank (8) hinterlegt sind und die Verarbeitungseinrichtung (2) mit der Referenzdatenbank (8) zur Übertragung von Daten verbunden ist.

3. Verfahren nach Anspruch 1 oder 2, **dadurch gekennzeichnet, dass** die Verarbeitungseinrichtung (2) zum Generieren des digitalen Abbilds (11) der autonomen landwirtschaftlichen Arbeitsmaschine (6) auf Daten (13) der autonomen landwirtschaftlichen Arbeitsmaschine (6), insbesondere Geometriedaten, Betriebszustandsdaten und/oder Ausstattungsdaten der autonomen landwirtschaftlichen Arbeitsmaschine (6), zugreift.

4. Verfahren nach einem der Ansprüche 1 bis 3, **gekennzeichnet durch** folgenden Verfahrensschritt:
- Generieren eines digitalen Abbilds (12) eines an die autonome landwirtschaftliche Arbeitsmaschine adaptierbaren Arbeitsaggregats (7) durch die Verarbeitungseinrichtung (2) und Speichern des digitalen Abbilds (12) des Arbeitsaggregats (7) in der Datenbank (3).

5. Verfahren nach Anspruch 4, **dadurch gekennzeichnet, dass** aus dem digitalen Abbild (12) des Arbeitsaggregats (7) Daten abgeleitet werden, die als Eingangsgrößen der Simulation dem mathematischen Modell des mindestens einen Arbeitsschrittes zugeführt werden.

6. Verfahren nach Anspruch 4 oder 5, **dadurch gekennzeichnet, dass** die Verarbeitungseinrichtung (2) zum Generieren des digitalen Abbilds (12) des Arbeitsaggregats (7) auf Daten (14) des Arbeitsaggregats (7), insbesondere Geometriedaten, Betriebszustandsdaten und/oder Ausstattungsdaten des Arbeitsaggregats (7), zugreift.

7. Verfahren nach einem der Ansprüche 1 bis 6, **dadurch gekennzeichnet, dass** mindestens ein Optimierungsziel (15), insbesondere ein die Bodenschonung, den Durchsatz oder die Bearbeitungszeit betreffendes Optimierungsziel (15), nutzerspezifisch vorgegeben wird, wobei das mindestens eine Optimierungsziel (15) als Randbedingung der Simulation dem mathematischen Modell des mindestens einen Arbeitsschrittes zugeführt wird.

8. Verfahren nach einem der Ansprüche 1 bis 7, **dadurch gekennzeichnet, dass** die Anweisung zur Durchführung des Arbeitsschrittes Folgendes umfasst:
- eine Vorschrift, die eine von der autonomen landwirtschaftlichen Arbeitsmaschine (6) abzufahrende Route definiert;
- eine Vorschrift, die eine Ansteuerung von Arbeitsaggregaten der autonomen landwirtschaftlichen Arbeitsmaschine (6) definiert; und/oder
- eine Vorschrift, die eine Ansteuerung mindestens eines an die autonome landwirtschaftliche Arbeitsmaschine (6) adaptierten Arbeitsaggregats (7) definiert.

9. Verfahren nach einem der Ansprüche 1 bis 8, **dadurch gekennzeichnet, dass** als Ausgangsgröße der Simulation eine Anweisung zur Vorbereitung der autonomen landwirtschaftlichen Arbeitsmaschine (6) im Hinblick auf die Durchführung des Arbeitsschrittes erzeugt wird, wobei die Anweisung an eine Person übermittelt wird, die die Anweisung zur Vorbereitung der autonomen landwirtschaftlichen Arbeitsmaschine (6) ausführt.

10. Verfahren nach Anspruch 9, **dadurch gekennzeichnet, dass** die Anweisung zur Vorbereitung der autonomen landwirtschaftlichen Arbeitsmaschine (6) Folgendes umfasst:
- eine Vorschrift, die eine Ballastierung der autonomen landwirtschaftlichen Arbeitsmaschine (6) definiert;
- eine Vorschrift, die ein an die autonome landwirtschaftliche Arbeitsmaschine (6) zu adaptierendes Arbeitsaggregat (7) definiert; und/oder
- eine Vorschrift, die Betriebsmittel definiert, mit denen die autonome landwirtschaftliche Arbeitsmaschine (7) und/oder das an die autonome landwirtschaftliche Arbeitsmaschine (6) zu adaptierende Arbeitsaggregat (7) zu versorgen ist.

11. Verfahren nach einem der Ansprüche 1 bis 10, **dadurch gekennzeichnet, dass** die Steuereinrichtung der autonomen landwirtschaftlichen Arbeitsmaschine (6) die Echtzeitdaten derart verarbeitet, dass die von der Verarbeitungseinrichtung (2) übermittelte Anweisung zur Durchführung des Arbeitsschrittes durch die autonome landwirtschaftliche Arbeitsmaschine (6) in Abhängigkeit der ermittelten Betriebsparameter und/oder Umgebungsparameter von der Steuereinrichtung der autonomen landwirtschaftlichen Arbeitsmaschine (6) selbsttätig angepasst wird.

12. Verfahren nach einem der Ansprüche 1 bis 11, **gekennzeichnet durch** folgenden Verfahrensschritt:
- Simulieren des landwirtschaftlichen Arbeitsablaufs mit einer Abfolge an Arbeitsschritten durch die Verarbeitungseinrichtung (2), wobei als Ausgangsgröße der Simulation eines Arbeitsschrittes der Abfolge an Arbeitsschritten ein angepasstes digitales Abbild (10) der zu bearbeitenden landwirtschaftlichen Fläche erzeugt wird, das in der Datenbank (3) gespeichert wird, wobei in der Datenbank (3) digitale Abbilder (11) einer Vielzahl an autonomen landwirtschaftlichen Arbeitsmaschinen (6) gespeichert sind, wobei aus den angepassten digitalen Abbildern (10) der zu bearbeitenden landwirtschaftlichen Fläche und den digitalen Abbildern (11) der Vielzahl an autonomen landwirtschaftlichen Arbeitsmaschinen (6) Daten abgeleitet werden, die als Eingangsgrößen einem jeweiligen für die Simulation eines Arbeitsschrittes verwendeten mathematischen Modell des Arbeitsschrittes zugeführt werden, und wobei als Ausgangsgröße jeder Simulation eines Arbeitsschrittes der Abfolge von Arbeitsschritten eine Anweisung zur Durchführung des Arbeitsschrittes durch zumindest eine der Vielzahl an autonomen landwirtschaftlichen Arbeitsmaschinen (6) erzeugt wird.

13. Verfahren nach einem der Ansprüche 1 bis 12, **dadurch gekennzeichnet, dass** die Simulation des Arbeitsschrittes mittels einer mit der Verarbeitungseinrichtung (2) verbundenen Anzeigeeinrichtung (4) grafisch dargestellt wird.

14. Computerprogrammprodukt umfassend Befehle, die bei der Ausführung des Programms durch eine Verarbeitungseinrichtung (2) diese veranlassen, bei einer autonomen landwirtschaftlichen Arbeitsmaschine das Verfahren nach einem der Ansprüche 1 bis 13 auszuführen.

15. Verwendung eines Computerprogrammprodukts nach Anspruch 14, **dadurch gekennzeichnet, dass** das Ausführen des Programms durch die Verarbeitungseinrichtung (2) bei einer vorliegenden Berechtigung freigeschaltet ist.

## Claims

1. A method for generating data for controlling an autonomous agricultural working machine (6), which comprises the following method steps:
- generating, by means of a processing device (2), a digital image (10) of an agricultural area to be processed in the form of a digital twin and storing the digital image (10) of the agricultural area to be processed in a database (3) which is connected to the processing device (2) for the transfer of data;
- generating, by means of the processing device (2), a digital image (11) of the autonomous agricultural working machine (6) in the form of a digital twin and storing the digital image (11) of the autonomous agricultural working machine (6) in the database (3);
- simulating, by means of the processing device (2), at least one working step of an agricultural working procedure comprising a sequence of working steps with the aid of a mathematical model of the at least one working step, wherein data are derived from the digital image (10) of the agricultural area to be processed and the digital image (11) of the autonomous agricultural working machine (6), the data being fed to the mathematical model of the at least one working step as input variables of the simulation, and wherein an instruction for the implementation of the working step by the autonomous agricultural working machine (6) is generated as an output variable of the simulation; and
- transmitting the instruction generated as an output variable of the simulation to a control device of the autonomous agricultural working machine (6) and execution of the instruction by the control device of the autonomous agricultural working machine (6);
wherein real time data are generated by means of a sensor device during the implementation of the working step by the autonomous agricultural working machine (6), the real time data representing operating parameters and/or environmental parameters of the autonomous agricultural working machine (6); wherein the real time data are transmitted to the processing device (2) in order to adjust the digital image (10) of the agricultural area to be processed and/or in order to adjust the digital image (11) of the autonomous agricultural working machine (6).

2. The method according to claim 1, **characterized in that** in order to generate the digital image (10) of the agricultural area to be processed, the processing device (2) accesses reference data (9), wherein the reference data (9) are agronomical data, in particular ground data, field crop data, yield data and/or area data, geographical data and/or weather data, wherein the reference data (9) are stored in the database (3) and/or in a reference database (8) which is independent of the database and the processing device (2) is connected to the reference database (8) for the transfer of data.

3. The method according to claim 1 or claim 2, **characterized in that** in order to generate the digital image (11) of the autonomous agricultural working machine (6), the processing device (2) accesses data (13) of the autonomous agricultural working machine (6), in particular geometrical data, operating status data and/or configurational data of the autonomous agricultural working machine (6).

4. The method according to one of claims 1 to 3, **characterized by** the following method step:
- generating, by means of the processing device (2), a digital image (12) of a working assembly (7) which can be adapted to the autonomous agricultural working machine and storing the digital image (12) of the working assembly (7) in the database (3).

5. The method according to claim 4, **characterized in that** data are derived from the digital image (12) of the working assembly (7) which are fed to the mathematical model of the at least one working step as input variables of the simulation.

6. The method according to claim 4 or claim 5, **characterized in that** in order to generate the digital image (12) of the working assembly (7), the processing device (2) accesses data (14) of the working assembly (7), in particular geometrical data, operating status data and/or configurational data of the working assembly (7).

7. The method according to one of claims 1 to 6, **characterized in that** at least one optimization objective (15), in particular an optimization objective (15) relating to the conservation of the ground, the throughput or the processing time, is specified in a user-specific manner, wherein the at least one optimization objective (15) is fed to the mathematical model of the at least one working step as a boundary condition of the simulation.

8. The method according to one of claims 1 to 7, **characterized in that** the instruction for implementing the working step comprises the following:
- a specification which defines a route to be followed by the autonomous agricultural working machine (6);
- a specification which defines a control of working assemblies of the autonomous agricultural working machine (6); and/or
- a specification which defines a control of at least one working assembly (7) which is adapted to the autonomous agricultural working machine (6).

9. The method according to one of claims 1 to 8, **characterized in that** an instruction for preparing the autonomous agricultural working machine (6) with a view to implementing the working step is generated as the output variable of the simulation, wherein the instruction is transmitted to a person who executes the instruction for preparing the autonomous agricultural working machine (6).

10. The method according to claim 9, **characterized in that** the instruction for preparing the autonomous agricultural working machine (6) comprises the following:
- a specification which defines a ballast loading of the autonomous agricultural working machine (6);
- a specification which defines a working assembly (7) to be adapted to the autonomous agricultural working machine (6); and/or
- a specification which defines operating resources to be supplied to the autonomous agricultural working machine (7) and/or to the working assembly (7) to be adapted to the autonomous agricultural working machine (6).

11. The method according to one of claims 1 to 10, **characterized in that** the control device of the autonomous agricultural working machine (6) processes the real time data in a manner such that the instruction for the implementation of the working step by the autonomous agricultural working machine (6) transmitted by the processing device (2) is automatically adapted by the control device of the autonomous agricultural working machine (6) as a function of the determined operating parameters and/or environmental parameters.

12. The method according to one of claims 1 to 11, **characterized by** the following method step:
- simulating, by means of the processing device (2), the agricultural working procedure with a sequence of working steps wherein an adapted digital image (10) of the agricultural area to be processed is generated as an output variable of the simulation of a working step of the sequence of working steps, the digital image being stored in the database (3), wherein digital images (11) of a plurality of autonomous agricultural working machines (6) are stored in the database (3), wherein data are derived from the adapted digital images (10) of the agricultural area to be processed and from the digital images (11) of the plurality of autonomous agricultural working machines (6), the data being fed as input variables to a respective mathematical model of a working step used for the simulation of the working step, and wherein an instruction for the implementation of the working step by at least one of the plurality of autonomous agricultural working machines (6) is generated as an output variable of each simulation of a working step of the sequence of working steps.

13. The method according to one of claims 1 to 12, **characterized in that** the simulation of the working step is graphically depicted by means of a display device (4) connected to the processing device (2).

14. A computer program product comprising commands which, during the execution of the program by a processing device (2), cause it to execute the method according to one of claims 1 to 13 in an autonomous agricultural working machine.

15. Use of a computer program product according to claim 14, **characterized in that** the execution of the program by the processing device (2) is enabled when an authorisation is present.

## Revendications

1. Procédé de génération de données en vue de la commande d'une machine de travail agricole (6) autonome, comprenant les étapes de procédé suivantes :
- génération d'une image numérique (10) d'une surface agricole à travailler, sous la forme d'un jumeau numérique, par un dispositif de traitement (2), et enregistrement de l'image numérique (10) de la surface agricole à travailler dans une base de données (3) reliée au dispositif de traitement (2) en vue de la transmission de données ;
- génération d'une image numérique (11) de la machine de travail agricole (6) autonome, sous la forme d'un jumeau numérique, par le dispositif de traitement (2), et enregistrement de l'image numérique (11) de la machine de travail agricole (6) autonome dans la base de données (3) ;
- simulation d'au moins une étape de travail d'un processus de travail agricole comportant une succession d'étapes de travail, à l'aide d'un modèle mathématique de l'étape de travail, au nombre d'au moins une, par le dispositif de traitement (2), où des données sont déduites de l'image numérique (10) de la surface agricole à travailler et de l'image numérique (11) de la machine de travail agricole (6) autonome, données qui sont amenées en tant que grandeurs d'entrée de la simulation au modèle mathématique de l'étape de travail, au nombre d'au moins une, et où une instruction pour l'exécution de l'étape de travail par la machine de travail agricole (6) autonome est générée en tant que grandeur de sortie de la simulation ; et
- transmission de l'instruction générée en tant que grandeur de sortie de la simulation, à un dispositif de commande de la machine de travail agricole (6) autonome, et exécution de l'instruction par le dispositif de commande de la machine de travail agricole (6) autonome ;
selon lequel des données en temps réel sont générées à l'aide d'un dispositif capteur, pendant l'exécution de l'étape de travail par la machine de travail agricole (6) autonome, données qui représentent des paramètres de fonctionnement et/ou des paramètres d'environnement de la machine de travail agricole (6) autonome ;
selon lequel les données en temps réel sont transmises au dispositif de traitement (2) en vue de l'adaptation de l'image numérique (10) de la surface agricole à travailler et/ou de l'image numérique (11) de la machine de travail agricole (6) autonome.

2. Procédé selon la revendication 1, **caractérisé en ce que**, pour la génération de l'image numérique (10) de la surface agricole à travailler, le dispositif de traitement (2) accède à des données de référence (9), les données de référence (9) étant des données agronomiques, notamment des données de sol, des données de culture, des données de rendement et/ou des données de surface, des données géographiques et/ou des données météorologiques, les données de référence (9) étant enregistrées dans la base de données (3) et/ou dans une base de données de référence (8) indépendante de la base de données, et le dispositif de traitement (2) étant relié à la base de données de référence (8) en vue de la transmission de données.

3. Procédé selon la revendication 1 ou 2, **caractérisé en ce que**, pour générer l'image numérique (11) de la machine de travail agricole (6) autonome, le dispositif de traitement (2) accède à des données (13) de la machine de travail agricole (6) autonome, notamment des données géométriques, des données d'état de fonctionnement et/ou des données d'équipement de la machine de travail agricole (6) autonome.

4. Procédé selon une des revendications 1 à 3, **caractérisé en ce qu'**il comprend l'étape de procédé suivante :
- génération, par le dispositif de traitement (2), d'une image numérique (12) d'un organe de travail (7) pouvant être adapté à la machine de travail agricole autonome, et enregistrement de l'image numérique (12) de l'organe de travail (7) dans la banque de données (3).

5. Procédé selon la revendication 4, **caractérisé en ce que** des données sont déduites de l'image numérique (12) de l'organe de travail (7), qui sont amenées en tant que grandeurs d'entrée de la simulation au modèle mathématique de l'étape de travail, au nombre d'au moins une.

6. Procédé selon la revendication 4 ou 5, **caractérisé en ce que**, pour générer l'image numérique (12) de l'organe de travail (7), le dispositif de traitement (2) accède à des données (14) de l'organe de travail (7), notamment des données géométriques, des données d'état de fonctionnement et/ou des données d'équipement de l'organe de travail (7).

7. Procédé selon une des revendications 1 à 6, **caractérisé en ce que** l'on prédéfinit de manière spécifique à l'utilisateur au moins un objectif d'optimisation (15), notamment un objectif d'optimisation (15) concernant la préservation du sol, le débit ou le temps de traitement, l'objectif d'optimisation (15), au nombre d'au moins un, étant amené en tant que condition marginale de la simulation au modèle mathématique de l'étape de travail, au nombre d'au moins une.

8. Procédé selon une des revendications 1 à 7, **caractérisé en ce que** l'instruction pour l'exécution de l'étape de travail comprend les éléments suivants :
- une consigne qui définit un itinéraire devant être suivi par la machine de travail agricole (6) autonome,
- une consigne qui définit une activation d'organes de travail de la machine de travail agricole (6) autonome, et/ou
- une consigne qui définit une activation d'au moins un organe de travail (7) adapté à la machine de travail agricole (6) autonome.

9. Procédé selon une des revendications 1 à 8, **caractérisé en ce qu'**est générée en tant que grandeur de sortie de la simulation, une instruction pour la préparation de la machine de travail agricole (6) autonome en vue de l'exécution de l'étape de travail, l'instruction étant transmise à une personne qui exécute l'instruction pour la préparation de la machine de travail agricole (6) autonome.

10. Procédé selon la revendication 9, **caractérisé en ce que** l'instruction pour la préparation de la machine de travail agricole (6) autonome comprend les éléments suivants :
- une consigne qui définit un lestage de la machine de travail agricole (6) autonome ;
- une consigne qui définit un organe de travail (7) devant être adapté à la machine de travail agricole (6) autonome ; et/ou
- une consigne qui définit des matières consommables avec lesquelles doivent être alimentés la machine de travail agricole (7) autonome et/ou l'organe de travail (7) devant être adapté à la machine de travail agricole (6) autonome.

11. Procédé selon une des revendications 1 à 10, **caractérisé en ce que** le dispositif de commande de la machine de travail agricole (6) autonome traite les données en temps réel de manière à ce que l'instruction pour l'exécution de l'étape de travail par la machine de travail agricole (6) autonome, transmise par le dispositif de traitement (2), soit adaptée automatiquement par le dispositif de commande de la machine de travail agricole (6) autonome, en fonction des paramètres de fonctionnement et/ou des paramètres d'environnement déterminés.

12. Procédé selon une des revendications 1 à 11, **caractérisé en ce qu'**il comprend l'étape de procédé suivante :
- simulation du processus de travail agricole, comportant une succession d'étapes de travail, par le dispositif de traitement (2), où une image numérique (10) adaptée de la surface agricole à travailler est générée en tant que grandeur de sortie de la simulation d'une étape de travail de la succession d'étapes de travail, laquelle image est enregistrée dans la base de données (3), où des images numériques (11) d'une multitude de machines de travail agricoles (6) autonomes sont enregistrées dans la base de données (3), où l'on déduit à partir des images numériques (10) adaptées de la surface agricole à travailler et des images numériques (11) de la multitude de machines de travail agricoles (6) autonomes, des données qui sont amenées en tant que grandeurs d'entrée à un modèle mathématique respectif d'une étape de travail, utilisé pour la simulation de l'étape de travail, et où une instruction pour l'exécution de l'étape de travail par au moins une machine de la multitude de machines de travail agricoles (6) autonomes est générée en tant que grandeur de sortie de chaque simulation d'une étape de travail de la succession d'étapes de travail.

13. Procédé selon une des revendications 1 à 12, **caractérisé en ce que** la simulation de l'étape de travail est représentée sous une forme graphique à l'aide d'un dispositif de visualisation (4) relié au dispositif de traitement (2).

14. Produit de programme informatique comprenant des instructions qui, lors de l'exécution du programme par un dispositif de traitement (2), amènent ce dernier à mettre en œuvre le procédé selon une des revendications 1 à 13 dans une machine de travail agricole autonome.

15. Utilisation d'un produit de programme informatique selon la revendication 14, **caractérisée en ce que** l'exécution du programme par le dispositif de traitement (2) est validée en présence d'une autorisation accordée.
